# EUROPÄISCHE PATENTSCHRIFT

(11) **EP 1 359 229 B1**
(45) Veröffentlichungstag und Bekanntmachung des Hinweises auf die Patenterteilung: **29.09.2004**
(21) Anmeldenummer: 03005668.3
(22) Anmeldetag: 13.03.2003
(51) Int. Cl.: C21D 1/10, C21D 9/14, H05B 6/02

(54) **Vorrichtung zum Oberflächenvergüten metallischer Werkstücke**
Device for surface hardening and tempering of metallic work pieces
Dispositif pour la trempe et revenu de surfaces de pièces métalliques

(30) Priorität: 03.05.2002 DE 10219939
(43) Veröffentlichungstag der Anmeldung: 05.11.2003
(73) Patentinhaber: EFD Induction GmbH, 79106 Freiburg (DE)
(72) Erfinder: Brenn, Karlheinz, 79268 Bötzingen (DE); Beringer, Alfred, 79427 Eschbach (DE)
(74) Vertreter: Goy, Wolfgang, Dipl.-Phys.

(56) Entgegenhaltungen:
- DE-A- 2 609 978
- DE-C- 4 013 148
- DE-C- 19 935 884

## Beschreibung

Die Erfindung betrifft eine Vorrichtung zum Oberflächenvergüten des Innern von hülsenförmigen oder becherförmigen, metallischen Werkstücken durch induktive Wärmebehandlung.

Die induktive Wärmebehandlung stellt eine Methode dar, um die Oberfläche von metallischen Werkstücken zu vergüten. Das Grundprinzip besteht darin, dass durch ein von außen angelegtes Magnetfeld in dem zu behandelnden Werkstück induktiv Wärme erzeugt wird.

Die erfindungsgemäße Vorrichtung ist insbesondere (jedoch nicht ausschließlich) zur induktiven Wärmebehandlung von sogenannten Tripoden, beispielsweise Achshülsen für Kraftfahrzeuge gedacht. Bei diesen Tripoden handelt es sich um becherförmige Gebilde mit dreieckiger Grundstruktur, wobei das eine Ende offen und das andere Ende geschlossen ist. Ziel ist es, die Innenseite des Werkstückes zu härten. Zu diesem Zweck wird der Induktor in das Werkstück eingefahren.

Das Problem besteht darin, dass die heutigen Werkstücke dieser Art relativ dünn sind. Indem an der offenen Stirnseite des Werkstücks die Magnetfeldlinien des Induktors nach außen gelangen, wird der Stirnrand des Werkstücks gehärtet, was nicht erwünscht ist.

Durch die DE 40 13 148 C1 ist es bekannt, daß eine Vorrichtung zur Oberflächenhärtung des Innern einer Zylinderlaufbuchse durch induktive Wärmebehandlung einen Induktorkopf aufweist, der in die Zylinderlaufbuchse einführbar ist.

Die DE 199 35 884 C1 zeigt ein Verfahren sowie eine Vorrichtung zum Härten von Tripoden. Das Grundprinzip dieser bekannte Vorrichtung besteht darin, daß ein Induktor in die Tripode eingefahren wird. In den Bereichen der Tripode, in denen keine Härtung stattfinden soll, erfolgt eine Beaufschlagung mit Wasser. Dabei ist insbesondere eine Stirnflächenbrause vorgesehen, welche mit dem Induktor verkoppelt ist. Diese Stirnflächenbrause weist unterseitig Öffnungen auf, aus welchen das Kühlwasser heraustritt und wobei dieses Kühlwasser auf die Stimfläche der Tripode auftrifft. Die Stirnflächenbrause erstreckt sich dabei längs des Verlaufs der Stirnfläche der Tripode.

Die DE 26 09 978 A1 zeigt ein Verfahren sowie eine Vorrichtung zur Erwärmung eines bandförmigen oder länglichen Werkstücks. Dabei ist ein Polschuh offenbart, welcher durch Zwischenlagen über die Länge gesehen unterschiedliche Permeabilitäten zur Änderung der Flußdichte aufweist.

Der Erfindung liegt die **Aufgabe** zugrunde, eine Vorrichtung zum Oberflächenvergüten des Inneren von hülsenförmigen oder becherförmigen, metallischen Werkstücken durch induktive Wärmebehandlung zu schaffen, welche mit einfachen technischen Mitteln nur die Innenfläche des Werkstücks härtet, nicht jedoch den umlaufenden Stimrand oder gar die Außenmantelfläche.

Die technische **Lösung** ist gekennzeichnet durch die Merkmale des Anspruchs 1.

Die Grundidee der erfindungsgemäßen Vorrichtung besteht darin, dass durch das metallische Element in Form einer Metallplatte oder eines Metallrings ein Abschirmeffekt erreicht wird, indem im Bereich dieses metallischen Elements die Feldlinien des Induktors unterbrochen werden. Dieser mit Abstand vor dem umlaufenden Stimrand des Werkstücks angeordnete, den Stirnbereich des zu härtenden Werkstücks abdeckende Kurzschlussring beispielsweise aus Messing oder Kupfer beeinflußt das Magnetfeld derart, dass der umlaufende Stirnrand des Werkstücks nicht erhitzt wird, indem die Magnetfeldlinien durch das metallische Element gewissermaßen abgelenkt werden. Dadurch wird eine technisch einfache Möglichkeit geschaffen, um ausschließlich die Innenfläche eines hülsenförmigen oder becherförmigen Werkstückes zu härten.

Eine bevorzugte Weiterbildung der erfindungsgemäßen Vorrichtung schlägt Anspruch 2 vor. Die Grundidee besteht in einem Kurzschlussring zur Abschirmung mit integrierter Brause. Dadurch wird der Metallring einerseits als metallischer Kurzschlussring zur Beeinflussung des Magnetfeldes am Auslauf des Werkstückes und andererseits als Brause zur Kühlung der Stirnseite des Werkstücks verwendet. Somit kann mittels dieser Abschirmbrause der Härteauslauf am Werkstück genau bestimmt werden. Die Kontur der Brausebohrungen wird dabei exakt von der Außen- sowie Innenkontur des Werkstücks abgeleitet. Dabei werden auch unterschiedliche Einlaufschrägen der Innenkontur des Werkstücks erfasst. Der Abschirmstrahl der Brause trifft jederzeit in der Mitte der Wandstärke auf die Stirnseite des Werkstücks auf. Durch dieses Zusammenspiel der beiden Abschirmmethoden erfolgt an der Stirnseite des Werkstücks keine Härtung. Als Kühlflüssigkeit kann Kühlwasser verwendet werden.

Die Weiterbildung gemäß Anspruch 3 schlägt vor, dass sich die Austrittsöffnungen um den gesamten Umfang des Stirnrandes des Werkstücks erstrecken.

Um die Magnetfeldstärke und damit den Härtegrad durch den Induktor zu beeinflussen, ist es bisherige Praxis, Induktormaterial anzubringen oder Induktormaterial wegzulassen. Somit kann die Einwirkung der Feldstärke auf bestimmte Zonen beeinflusst werden. Diese sogenannten Konzentratoren haben jedoch den Nachteil, dass das Magnetfeld nur beschränkt beeinflusst werden kann.

Aus diesem Grunde schlägt die Weiterbildung gemäß Anspruch 4 vor, dass der Induktor mehrere Zonen mit Materialien unterschiedlicher Permeabilität aufweist. Die Grundidee besteht darin, dass durch die Verwendung mehrerer Konzentratormaterialien mit unterschiedlichen magnetischen Widerständen die Konzentration und Fokussierung der elektromagnetischen Felder sehr genau einstellbar ist. Somit können auf technisch einfache Weise die elektromagnetischen Felder durch Nutzung verschiedener Sättigungseigenschaften von Konzentratoren gesteuert werden. Mit diesen unterschiedlichen ferromagnetischen Materialien kann somit das Magnetfeld beeinflusst werden. Die Schaffung einer gezielten Magnetfeldstruktur und damit einer gezielten Härtung des Werkstückes ist somit technisch einfach realisierbar. Das Konzept besteht somit in einer unterschiedlichen magnetischen Konzentration für die Induktoren zur Steuerung unterschiedlicher Randhärtetiefen in einer Fläche. Zur Fokussierung der elektromagnetischen Feldlinien werden insgesamt Feldkonzentratoren mit hoher Sättigungsinduktion eingesetzt, um so partiell eine Erwärmung in metallischen Werkstoffen zu erzielen. Durch Verwendung unterschiedlicher Konzentratortypen mit unterschiedlichen Materialzusammensetzungen, welche verschieden starke magnetische Widerstände besitzen, können unterschiedliche Feldkonzentrationen auf die zu erwärmenden Werkstückflächen fokussiert werden. Da der magnetische Fluss vom magnetischen Widerstand abhängig ist und die Geometrie der Konzentratoren oft nicht verändert werden kann, werden erfindungsgemäß Materialien mit entsprechend unterschiedlicher Permeabilität eingesetzt.

Die Weiterbildung gemäß Anspruch 5 schlägt schließlich vor, dass sich die Zonen längs des Induktors und/oder um den Umfang des Induktors herum erstrecken.

Ein Ausführungsbeispiel einer erfindungsgemäßen Vorrichtung zum Oberflächenvergüten von Tripoden wird nachfolgend anhand der Zeichnungen beschrieben. In diesen zeigt:

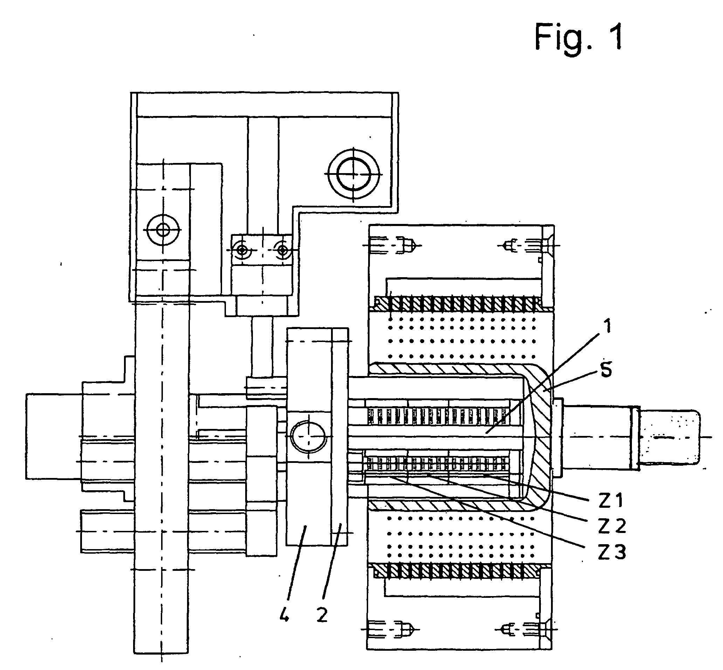

- Fig. 1: eine Ansicht der Vorrichtung, teilweise im Längsschnitt;
- Fig. 2: eine Draufsicht auf den sogenannten Kurzschlussring der Vorrichtung.

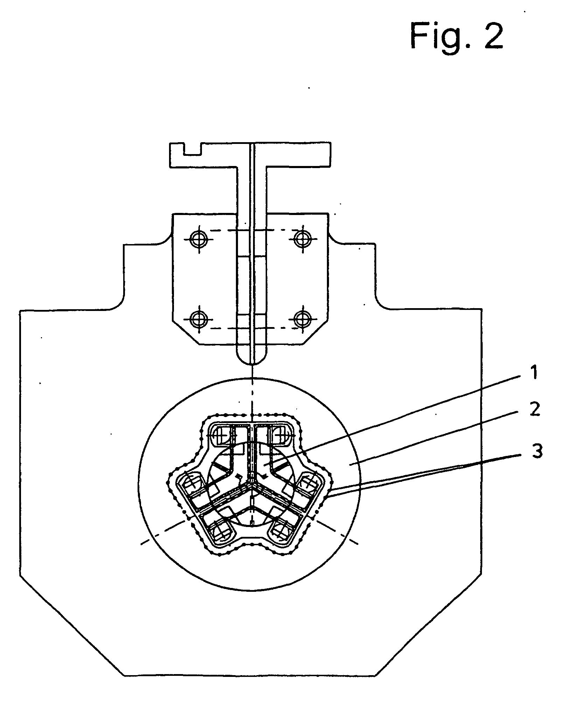

Die Vorrichtung zum Oberflächenvergüten sogenannter Tripoden weist als zentralen Bestandteil einen Induktor 1 auf, dessen Querschnittskontur der Fig. 2 entnehmbar ist. Dieser Induktor 1 weist über die Länge verteilt drei Zonen Z1, Z2 sowie Z3 mit sogenannten Konzentratoren mit unterschiedlicher Permeabilität auf.

Am einen Ende des Induktors 1 ist ein metallisches Element 2 in Form eines Metallringes angeordnet. Die Kontur ist ebenfalls der Fig. 2 entnehmbar.

Gegenüber dem umlaufenden Stirnrand des zu härtenden Werkstücks 5 weist das metallische Element 2 Austrittsöffnungen 3 einer Brause 4 auf.

Die Funktionsweise ist wie folgt:

Der Induktor 1 taucht in die zu härtende Tripode ein. Durch entsprechende Auswahl der Konzentratormaterialien in den Zonen Z1 bis Z3 kann das Magnetfeld gezielt beeinflusst und damit die Härtung im Innern der Tripode gesteuert werden. Das metallische Element 2 in Form eines Kurzschlussringes dient der Beeinflussung des Magnetfeldes am Auslauf des Werkstückes dergestalt, dass dort keine Härtung stattfindet. Zusätzlich erfolgt durch das durch die Austrittsöffnungen 3 austretende Wasser der Brause 4 eine Kühlung dieses umlaufenden Stirnrandes des Werkstücks 5.

### Bezugszeichenliste

- 1: Induktor
- 2: metallisches Element
- 3: Austrittsöffnung
- 4: Brause
- 5: Werkstück

- Z1: Zone
- Z2: Zone
- Z3: Zone

## Patentansprüche

1. Vorrichtung zum Oberflächenvergüten des Innern von hülsenförmigen oder becherförmigen, metallischen Werkstücken (5) durch induktive Wärmebehandlung,
mit einem Induktor (1), welcher für die Wärmebehandlung in das Werkstück (5) eingetaucht ist, sowie
mit einem gegenüber dem umlaufenden Stirnrand der offenen Stirnseite des Werkstücks (5) angeordneten metallischen Element (2) in Form eines Metallringes oder einer Metallplatte,
wobei das metallische Element (2) derart ausgebildet sowie angeordnet ist, daß im Bereich dieses metallischen Elements (2) die Feldlinien des Induktors (1) zum Erreichen eines Abschirmeffektes derart unterbrochen und abgelenkt sind, dass der umlaufende Stirnrand des Werkstücks (5) nicht erhitzt wird.

2. Vorrichtung nach dem vorhergehenden Anspruch,
**dadurch gekennzeichnet,**
**dass** das metallische Element (2) zum Stirnrand des Werkstücks (5) hin gerichtete Austrittsöffnungen (3) für eine Kühlflüssigkeit aufweist.

3. Vorrichtung nach Anspruch 2,
**dadurch gekennzeichnet,**
**dass** sich die Austrittsöffnungen (3) um den gesamten Umfang des Stirnrandes des Werkstücks (5) erstrecken.

4. Vorrichtung nach einem der vorhergehenden Ansprüche,
**dadurch gekennzeichnet,**
**dass** der Induktor (1) mehrere Zonen (Z1, Z2, Z3) mit Materialien unterschiedlicher Permeabilität aufweist.

5. Vorrichtung nach Anspruch 4,
**dadurch gekennzeichnet,**
**dass** sich die Zonen (Z1, Z2, Z3) längs des Induktors (1) und/oder um den Umfang des Induktors (1) herum erstrecken.

## Claims

1. Device for treating the surface of the interior of sleeve-shaped or cup-shaped metallic workpieces (5) by inductive heat treatment, comprising an inductor (1), which is immersed in the workpiece (5) for the heat treatment, and a metallic element (2) which is in the form of a metal ring or a metal plate and arranged opposing the peripheral end edge of the open end face of the workpiece (5), wherein the metallic element (2) is designed and arranged such that in the region of this metallic element (2) the lines of electric flux of the inductor (1) are interrupted and deflected to achieve a screening effect in such a way that the peripheral end edge of the workpiece (5) is not heated.

2. Device according to the preceding claim, **characterised in that** the metallic element (2) has outlet apertures (3) for a cooling liquid directed towards the end edge of the workpiece (5).

3. Device according to claim 2, **characterised in that** the outlet apertures (3) extend around the entire periphery of the end edge of the workpiece (5).

4. Device according to any one of the preceding claims, **characterised in that** the inductor (1) has a plurality of zones (Z1, Z2, Z3) with materials of different permeability.

5. Device according to claim 4, **characterised in that** the zones (Z1, Z2, Z3) extend along the inductor (1) and/or around the periphery of the inductor (1).

## Revendications

1. Dispositif pour traiter la surface intérieure de pièces métalliques (5) en forme de douille ou de coupe à l'aide d'un traitement thermique inductif, comprenant un inducteur (1) qui est plongé à l'intérieur de la pièce à usiner (5) pour effectuer le traitement thermique, et un élément métallique (2) ayant la forme d'un anneau métallique ou d'une plaque métallique qui est disposé en face du bord frontal circulaire du côté frontal de la pièce à usiner (5), sachant que l'élément métallique (2) est réalisé et disposé de telle manière que, au voisinage de cet élément métallique (2), les lignes de champ de l'inducteur (1) sont interrompues et déviées de telle sorte que le bord frontal circulaire de la pièce à usiner (5) n'est pas chauffé.

2. Dispositif selon la revendication précédente, **caractérisé en ce que** l'élément métallique (2) présente des orifices de sortie (3) pour un liquide de refroidissement qui sont dirigés vers le bord frontal de la pièce à usiner (5).

3. Dispositif selon la revendication 2, **caractérisé en ce que** les orifices de sortie (3) s'étendent sur l'ensemble du pourtour du bord frontal de la pièce à usiner (5).

4. Dispositif selon l'une des revendications précédentes, **caractérisé en ce que** l'inducteur (1) comprend plusieurs zones (Z1, Z2, Z3) avec des matériaux de différentes perméabilités.

5. Dispositif selon la revendication 4, **caractérisé en ce que** les zones (Z1, Z2, Z3) s'étendent le long de l'inducteur (1) et/ou autour du pourtour de l'inducteur (1).
